# FASCICULE DE BREVET EUROPEEN

(11) **EP 3 350 571 B1**
(45) Date de publication et mention de la délivrance du brevet: **06.12.2023**
(21) Numéro de dépôt: 16806222.2
(22) Date de dépôt: 21.10.2016
(51) Int. Cl.: G01N 21/17, G01N 21/05

(54) **DISPOSITIF DE DÉTECTION DE GAZ À TRÈS FORTE SENSIBILITÉ BASÉ SUR UN RÉSONATEUR DE HELMHOLTZ**
VORRICHTUNG AUF BASIS EINES HELMHOLZ-RESONATORS ZUR DETEKTION VON GASEN MIT HÖHER EMPFINDLICHKEIT
HIGH SENSITIVITY GAS DETECTION APPARATUS BASED ON A HELMHOLTZ RESONATOR

(43) Date de publication de la demande: 25.07.2018
(73) Titulaire: Aerovia, 51686 Reims Cedex 2 (FR); Université De Reims Champagne-Ardenne, 51097 Reims Cedex (FR); C.N.R.S., 75794 Paris Cedex 16 (FR)
(72) Inventeur: RISSER, Christophe, 51687 Reims (FR); ZENINARI, Virginie, 51097 Reims (FR); PARVITTE, Bertrand, 51097 Reims (FR)
(74) Mandataire: Cornuejols, Georges
(86) Numéro de dépôt international: PCT/FR2016/052741
(87) Numéro de publication internationale: WO 2017/068301

(56) Documents cités:
- EP-A1- 2 515 096
- EP-B1- 2 515 096
- FR-A1- 2 963 102
- FR-B1- 2 815 122
- US-A1- 2003 112 019
- US-A1- 2005 210 956
- K. SONG ET AL: "Differential Helmholtz resonant photoacoustic cell for spectroscopy and gas analysis with room-temperature diode lasers", APPLIED PHYSICS B: LASERS AND OPTICS, vol. 75, no. 2-3, 1 septembre 2002 (2002-09-01), pages 215-227, XP055146865, ISSN: 0946-2171, DOI: 10.1007/s00340-002-1000-y
- KAPITANOV ET AL: "Two-channel opto-acoustic diode laser spectrometer and fine structure of methane absorption spectra in 6070-6180cm<-1> region", SPECTROCHIMICA ACTA. PART A: MOLECULAR AND BIOMOLECULAR SPECTROSCOPY, ELSEVIER, AMSTERDAM, NL, vol. 66, no. 4-5, 7 mars 2007 (2007-03-07) , pages 811-818, XP005912950, ISSN: 1386-1425, DOI: 10.1016/J.SAA.2006.10.046
- ZENINARI V ET AL: "DESIGN AND CHARACTERISTICS OF A DIFFERENTIAL HELMHOLTZ RESONANT PHOTOACOUSTIC CELL FOR INFRARED GAS DETECTION", INFRARED PHYSICS AND TECHNOLOGY, ELSEVIER SCIENCE, GB, vol. 40, no. 1, 1 février 1999 (1999-02-01), pages 1-23, XP001011531, ISSN: 1350-4495, DOI: 10.1016/S1350-4495(98)00038-3

## Description

### DOMAINE TECHNIQUE DE L'INVENTION

La présente invention vise un dispositif d'analyse de gaz à très forte sensibilité basé sur un résonateur de Helmholtz. Elle s'applique, en particulier, à la détection de traces de gaz dans l'air ambiant, par exemple pour la lutte contre la pollution, la détection de fuites de gaz ou la prévention de risques chimiques.

### ETAT DE LA TECHNIQUE

L'analyse de gaz à l'état de traces est aujourd'hui de plus en plus courante dans les secteurs industriels et de l'environnement. Parmi les technologies capables de détecter des espèces à des concentrations dans la gamme du ppb (partie par milliard, soit 10⁻⁹), les technologies optiques consistant en l'excitation de la molécule à détecter par voie optique en utilisant un laser sont les plus prometteuses et présentent les avantages suivant :
sélectivité de la mesure,
sensibilité,
précision de la mesure et
gamme de mesure couvrant l'ensemble des gaz, moyennant l'utilisation d'une longueur d'onde adaptée pour l'excitation optique de l'espèce recherchée par le laser.

Il existe de nombreuses technologies optiques. Les plus couramment utilisées sont la technologie CRDS (acronyme de Cavity Ring-Down Spectroscopy pour spectroscopie par temps de décroissance en cavité), la technologie OFCEAS (acronyme de Optical Feedback Cavity Enhanced Absorption Spectroscopy pour spectroscopie d'absorption améliorée en cavité par retour optique) et la technologie photo-acoustique.

La technologie photo-acoustique est particulièrement intéressante de par sa simplicité, sa robustesse et les niveaux de détection limites pouvant être atteints tout en maintenant un niveau de sélectivité important. Les besoins industriels à ce jour commencent à se situer non plus au niveau du ppb mais tendent vers le ppt (partie par trillion, soit 10⁻¹²).

Pour atteindre ces niveaux extrêmement faibles de détection et de mesure, il est alors nécessaire pour les techniques telles que la CRDS ou l'OFCEAS d'augmenter significativement les durées (équivalentes à des distances) de parcours du faisceau optique d'excitation et/ou augmenter la durée d'intégration. L'augmentation de la durée de parcours impose des instruments de plus en plus complexes et difficiles à régler d'un point de vue optique, instruments qui restent très sensibles aux variations de température et de pression et aux vibrations. L'augmentation de la durée d'intégration, à durée de parcours fixe, permet d'abaisser le niveau de détection limite mais ne constitue pas une amélioration forte et constitue plutôt une solution de deuxième ordre. De plus, l'augmentation de la durée d'intégration ne permet plus d'avoir des mesures rapides nécessaires pour la mesure notamment des flux à partir de technique de modélisation d'Eddy covariance.

La technologie photo-acoustique permet d'atteindre les mêmes niveaux de détection limites que les autres techniques avec des avantages de simplicité de réglage et de stabilité dans le temps couplée à une mesure rapide. Cependant, elle n'offre pas, non plus, les niveaux de détection maintenant demandés dans les applications industrielles.

Un dispositif de détection de gaz à cellule de Helmholtz est décrit dans le brevet FR 2 815 122. Ce dispositif est constitué d'un laser dont le faisceau, modulé à la fréquence de résonance de la cellule, traverse une cellule de mesure. La cellule est constituée par deux gros volumes reliés par deux capillaires. La cellule est fermée par quatre fenêtres semi-transparentes pour laisser passer le faisceau laser. Par effet photo-acoustique, la résonance de Helmholtz permet de réaliser une mesure différentielle dans laquelle les signaux des deux transducteurs acousto-électrique, par exemple, des microphones, sont en opposition de phase. La mesure de la différence des tensions des signaux sortant des transducteurs est alors proportionnelle à la concentration du gaz dans la cellule.

Les variations de pression sont localisées dans les gros volumes. Le premier transducteur permet la mesure des variations de pression dans le premier gros volume. Le deuxième transducteur mesure la pression dans le deuxième volume, en opposition de phase avec le premier volume. Une mesure différentielle permet de doubler le signal photo-acoustique dû à la présence du gaz dans la cellule tout en réalisant simultanément une soustraction des bruits parasites environnants.

L'une des conditions qui amène la création de l'onde de pression stationnaire est imposée par le recouvrement maximisé entre la modulation de l'intensité lumineuse émise par le laser et la répartition du mode de résonance considéré.

On donne, ci-après, des problèmes rencontrés par les techniques existantes. La fréquence de fonctionnement de l'ensemble des éléments constituants le système photo-acoustique est imposée par la fréquence de résonance acoustique de la cellule de mesure. La fréquence d'un résonateur de Helmholtz aux dimensions macroscopiques et fonctionnant sur le premier mode se trouve dans les basses fréquences (< kHz). Or les bruits électronique et acoustique sont inversement proportionnels à la fréquence de travail. Le système est donc contraint à un fonctionnement sur des fréquences ne favorisant pas un rapport signal à bruit élevé malgré la mesure différentielle.

L'augmentation du signal photo-acoustique et celle de la fréquence de résonance sont permises grâce à la miniaturisation de la cellule de mesure. Ce processus nécessite néanmoins d'améliorer l'injection et la mise en forme du faisceau dont les dimensions se rapprochent du diamètre d'entrée de la cellule. De plus, la fabrication de la cellule se complexifie notamment pour atteindre un niveau d'état de surface interne proche de la cellule macroscopique alors que les dimensions diminuent.

La concentration du gaz à analyser est déduite de la mesure de la tension aux bornes des transducteurs électroacoustiques. Dans la mesure de faibles concentrations, l'effet photo-acoustique qui conduit à la mise en résonance de la cellule n'est pas dû uniquement à l'échauffement du gaz par le laser mais aussi par l'échauffement des fenêtres qui absorbent une partie de la puissance du laser. Ce bruit provenant de l'échauffement des fenêtres est donc mesuré par les transducteurs et participe à la dégradation de la limite de détection du système.

Pour la détection de gaz multiple, dans le dispositif décrit dans le brevet FR 2 963 102, un laser traverse le premier volume résonant et un autre laser le deuxième volume, dans lequel la variation de la pression est en opposition de phase avec la variation de pression dans le premier volume. Les deux lasers sont modulés à la même fréquence, c'est-à-dire à la fréquence de résonance de la cellule photo-acoustique. Le système décrit permet de mesurer alternativement la concentration de deux gaz. Il faut alors soit éteindre alternativement les lasers, soit bloquer mécaniquement et alternativement les faisceaux laser. La première solution peut nécessiter une attente de quelques secondes avant que la longueur d'onde d'émission du laser ne soit stabilisée sur le pic d'absorption de la première molécule à détecter. Ce temps d'attente dépendra de l'efficacité de la régulation en température du laser autour d'un point de fonctionnement. La deuxième solution fait intervenir un élément mécanique sujet à l'usure et peu adapté dans un système photo-acoustique. Dans les deux cas, la mesure simultanée des deux gaz n'est pas possible.

On connaît aussi le document US 2005/210 956, le document US 2003/112019, le document EP 2 515 096, la publication de K Song ET AL « Differential Helmholtz resonant photoacoustic cel for spectroscopy and gas analysis with room-temperature doide lasers », Applied Physics B : Lasers and Optics, vol. 75, no. 2-3, 1er septembre 2002 (2002-09-01), pages 213-227, XP055146865, ISSN : 0946-2171, DOI : 10.1007s00340-002-1000-y, la publication de Kapitanov ET AL : « Two-channel opto-acoustic doide laser spectrometer and fine structure of methane absorption spectra in 6070-6180cm-1 région », Spectrochimica Acta. Part A : Molecular and Biomolecular Spectroscopy, Elsevier, Amsterdam, NL, vol. 66, no. 4-5, 7 mars 2007 (2007-03-07), pages 811-818, XP005912950, ISSN : 1386-1425, DOI : 10.1016/J.SSA.2006.10.046 et la publication de Zeninari V ET AL : « Design and Characteristics of a Differential Hilmholtz Resonant Photoacoustic Cell for Infrared Gas Détection », Infrared Physics and Technology, Elsevier Science, GB, vol. 40, no. 1, 1er février 1999 (1999-02-01), pages 1-23, XP001011531, ISSN : 1350-4495, DOI : 10.1016/S1350-4495(98)00038-3.

Chacun de ces documents présente un dispositif limité à la détection d'une seule espèce gazeuse.

### OBJET DE L'INVENTION

La présente invention vise à remédier à tout ou partie de ces inconvénients.

A cet effet, selon un premier aspect, la présente invention vise un dispositif conforme à la revendication 1.

Grâce à ces dispositions, on mesure simultanément la quantité de deux gaz différents dans la même cellule, sans que l'une des mesures ne perturbe l'autre.

Dans des modes de réalisation, les sources d'énergie radiante laser ont des longueurs d'onde d'émission correspondant à des pics d'absorption du même gaz.

Dans des modes de réalisation, les sources d'énergie radiante laser ont la même longueur d'onde d'émission.

Grâce à chacune de ces dispositions, la détection et la mesure de quantité du gaz recherché est plus fiable.

Dans des modes de réalisation, le dispositif objet de l'invention comporte deux sources d'énergie radiante laser en regard de deux tubes parallèles de la cuve de type Helmholtz, les dites deux sources d'énergie radiantes laser ayant des longueurs d'onde d'émission correspondant à des pics d'absorption du même gaz, éventuellement identiques, dans lequel le moyen de modulation est adapté à moduler simultanément l'énergie d'excitation fournie par les deux sources d'énergie radiante laser se trouvant en regard de deux tubes différents en appliquant un déphasage de 180° entre les énergies d'excitation des dites sources d'énergie radiante laser.

Grâce à ces dispositions, la détection et la mesure de quantité du gaz recherché est plus fiable, sans perturber la détection et la mesure de quantité du deuxième gaz.

Dans des modes de réalisation, dans la cuve résonante de type Helmholtz, les extrémités des tubes primaires touchent les extrémités des tubes secondaires.

Dans des modes de réalisation, les extrémités des tubes présentent des parois inclinées par rapport aux axes principaux des tubes pour réfléchir les ondes acoustiques depuis les tubes primaires vers les tubes secondaires et réciproquement.

Grâce à chacune de ces dispositions, les ondes acoustiques suivent successivement les tubes de la cuve de type Helmholtz.

Dans des modes de réalisation, la cuve de type Helmholtz comporte au moins une entrée ou une sortie de gaz sur une paroi extrême d'un tube.

Grâce à ces dispositions, les entrées et les sorties de gaz sont éloignées des transducteurs acousto-électriques, ce qui réduit les risques de perturbation des signaux acoustiques captés.

Dans des modes de réalisation, au moins un moyen de traitement de signaux issus des transducteurs disposés sur des tubes parallèles comporte un amplificateur opérationnel, les signaux de sortie des transducteurs étant appliqués aux entrées positives et négatives de l'amplificateur opérationnel.

Grâce à ces dispositions, le circuit électronique est simplifié et induit des bruits très limités.

### BREVE DESCRIPTION DES FIGURES

D'autres avantages, buts et caractéristiques particulières de l'invention ressortiront de la description non limitative qui suit d'au moins un mode de réalisation particulier des dispositifs et du procédé objets de la présente invention, en regard des dessins annexés, dans lesquels :
- la figure 1 représente, schématiquement, un premier mode de résonance d'une cuve de type Helmholtz d'un dispositif objet de la présente invention,
- la figure 2 représente, schématiquement, un deuxième mode de résonance d'une cuve de type Helmholtz d'un dispositif objet de la présente invention,
- la figure 3 représente, schématiquement, un mode de réalisation particulier du dispositif objet de la présente invention
- la figure 4 représente une comparaison de courbes de réponse des deux modes de résonnance du dispositif illustré en figure 3 et
- la figure 5 représente un logigramme d'étapes d'un mode de réalisation particulier du procédé objet de la présente invention.

### DESCRIPTION D'EXEMPLES DE REALISATION DE L'INVENTION

On note, dès à présent, que les figures ne sont pas à l'échelle.

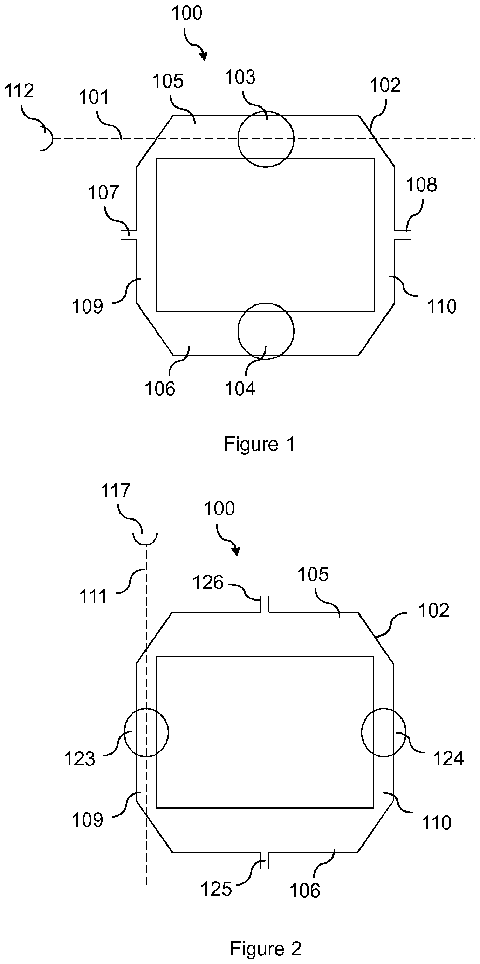

Dans la figure 1, on observe une cuve de type Helmholtz 100 comportant des tubes primaires parallèles 105 et 106 fermés à leurs extrémités et reliés entre eux par des tubes secondaires parallèles 109 et 110. Les tubes primaires et les tubes secondaires sont perpendiculaires.

Au milieu de ces tubes primaires 105 et 106 sont disposés des transducteurs acousto-électriques 103 et 104, respectivement. Les extrémités des tubes primaires sont des fenêtres 102 inclinées par rapport aux axes principaux des tubes primaires pour réfléchir les signaux acoustiques depuis les tubes primaires vers les tubes secondaires et réciproquement. Les fenêtres 102 sont transparentes pour les longueurs d'ondes lumineuses utilisées.

Des entrée et sortie de gaz, respectivement 107 et 108, constituent un moyen d'introduction de gaz dans la cuve 100. Ces entrée et sortie sont fermées lors du fonctionnement du dispositif de détection et de mesure d'une quantité de gaz.

Une première source d'énergie radiante laser 112 fournit une énergie d'excitation dans le tube primaire 105, à une longueur d'onde d'émission correspondant à une longueur d'onde d'absorption maximum localement pour un premier gaz.

La première source d'énergie radiante laser 112 est positionnée en regard d'une fenêtre fermant une extrémité du tube primaire 105.

La première source d'énergie radiante laser 112 est modulée à une première fréquence de résonance de la cuve, pour générer une première onde stationnaire se propageant le long des tubes secondaires 109 et 110.

Comme on le comprend aisément, lorsque la première source d'énergie radiante laser 112 est allumée, elle échauffe le gaz pour lequel la longueur d'onde d'émission de la première source 112 est une longueur d'onde d'absorption. En s'échauffant, ce gaz génère une onde acoustique qui se propage, à travers les tubes secondaires 109 et 110, au tube primaire 106. Les variations de pression à l'intérieur du tube primaire 106 reflètent donc les variations de pression à l'intérieur du tube primaire 105, avec un retard. Puis, ces variations de pression à l'intérieur du tube primaire 106 se répercutent, par l'intermédiaire des tubes secondaires 109 et 110, dans le tube primaire 105. La durée totale de retour de l'onde de pression au tube primaire 105 correspond à une période d'une première résonance de la cuve 100. L'inverse de cette première période est la première fréquence de résonance.

En modulant l'émission de la première source 112 à cette première fréquence de résonance, on provoque l'apparition d'une onde stationnaire, les variations de pression entre les deux tubes primaires 105 et 106 étant en opposition de phase.

Les transducteurs acousto-électriques 103 et 104 fournissent un signal électrique à la première fréquence de résonance et avec une amplitude proportionnelle à la quantité du premier gaz recherché présente dans la cuve 100. En faisant la différence entre ces signaux, on obtient un signal débarrassé du bruit acoustique (qui, par définition, est sensiblement en phase dans les deux tubes primaires 105 et 106) d'amplitude proportionnelle à la quantité du premier gaz recherché.

Dans la figure 2, on observe la cuve de type Helmholtz 100.

Au milieu des tubes secondaires 109 et 110 sont disposés des transducteurs acousto-électriques 123 et 124, respectivement.

Des entrée et sortie de gaz, respectivement 125 et 126, constituent un moyen d'introduction de gaz dans la cuve 100. Ces entrée et sortie sont fermées lors du fonctionnement du dispositif de détection et de mesure d'une quantité du gaz.

Une deuxième source d'énergie radiante laser 117 fournit une énergie d'excitation dans le tube secondaire 109, à une longueur d'onde d'émission correspondant à une longueur d'onde d'absorption maximum localement pour un deuxième gaz, éventuellement identique au premier gaz, la longueur d'onde de la deuxième source étant éventuellement identique à la longueur d'onde de la première source 112.

La deuxième source d'énergie radiante laser 117 est positionnée en regard d'une fenêtre fermant une extrémité du tube primaire 105.

La deuxième source d'énergie radiante laser 117 est modulée à une deuxième fréquence de résonance de la cuve, pour générer une deuxième onde stationnaire se propageant le long des tubes primaires 105 et 106. On observe que la deuxième onde stationnaire coïncide avec un noeud de ce mode au niveau des transducteurs 103 et 104 si bien que la détection et la mesure de quantité de gaz effectuée à partir des signaux issus de ces transducteurs 103 et 104 ne sont pas perturbées par cette deuxième onde stationnaire, dont la fréquence de travail du mode primaire intervient de plus à une fréquence différente du mode secondaire.

De même que pour la première source 112, en modulant l'émission de la deuxième source 117 à la deuxième fréquence de résonance, on provoque l'apparition d'une onde stationnaire, les variations de pression entre les deux tubes secondaires 109 et 110 étant en opposition de phase.

Les transducteurs acousto-électriques 123 et 124 fournissent un signal électrique à la deuxième fréquence de résonance et avec une amplitude proportionnelle à la quantité du deuxième gaz recherché présente dans la cuve 100. En faisant la différence entre ces signaux, on obtient un signal débarrassé du bruit acoustique et des variations de pression liées à la première onde stationnaire (qui, par construction, est en phase dans les deux tubes secondaires 109 et 110) d'amplitude proportionnelle à la quantité du deuxième gaz recherché.

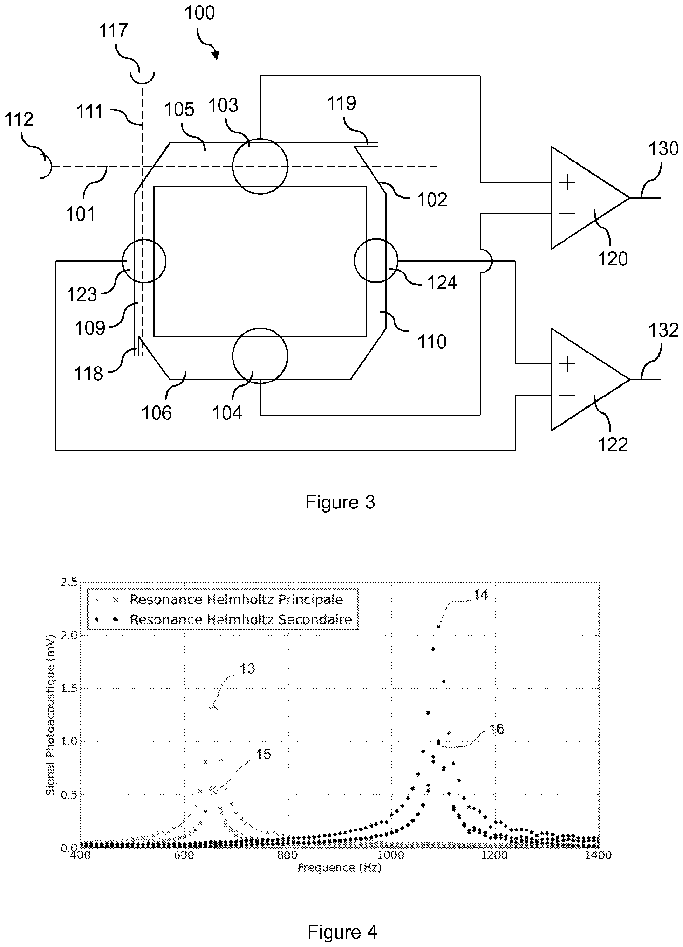

Comme on l'observe en figure 3, on retrouve, dans des modes de réalisation du dispositif objet de la présente invention, l'ensemble des composants illustrés en figures 1 et 2, à l'exception des entrées et sorties de gaz 107, 108, 125 et 126.

Ces entrées et sorties de gaz sont remplacées par des entrée et sorties de gaz, respectivement 118 et 119, positionnées à proximité ou sur les surfaces inclinées par rapport aux axes de tubes et faisant la jonction entre les tubes primaires et les tubes secondaires. Ces positions réduisent les perturbations des signaux sonores perçus par les transducteurs acousto-électriques.

Comme moyens de traitement des signaux issus des transducteurs acousto-électriques, on prévoit :
- un amplificateur opérationnel 120 dont les entrées positive et négative reçoivent respectivement les signaux sortant des transducteurs 103 et 104 et
- un amplificateur opérationnel 122 dont les entrées positive et négative reçoivent respectivement les signaux sortant des transducteurs 123 et 124.

Les signaux sortants sur les sorties 130 et 132 de ces amplificateurs opérationnels 120 et 122 présentent des amplitudes proportionnelles aux quantités de gaz présentant une absorption des longueurs d'onde des sources d'énergie radiante laser 112 et 117.

Dans des variantes, on double au moins l'une des sources d'énergie radiantes 112 et 117. Préférentiellement, dans ces variantes, le dispositif de détection et de mesure comporte deux sources d'énergie radiante laser en regard de deux tubes parallèles de la cuve de type Helmholtz. Les dites deux sources d'énergie radiantes laser ayant des longueurs d'onde d'émission correspondant à des pics d'absorption du même gaz, éventuellement identiques. Le moyen de modulation de l'émission de ces sources est adapté à moduler simultanément l'énergie d'excitation fournie par les deux sources d'énergie radiante laser se trouvant en regard de deux tubes différents en appliquant un déphasage de 180° entre les énergies d'excitation des dites sources d'énergie radiante laser.

On observe, en figure 4, des amplitudes de signaux issus des transducteurs acousto-électriques et les amplitudes des signaux différentiels obtenus en sortie des amplificateurs opérationnels.

Pour obtenir ces valeurs, on fait varier la fréquence de modulation de chacune des sources d'énergie radiante 112 et 117, depuis 400 Hz jusqu'à 1400 Hz.

Dans cette figure 4, les croix 15 représentent les amplitudes des signaux de sortie des transducteurs 123 et 124, qui interviennent lorsque le premier mode de Helmholtz est excité. Les croix 13 représentent la mesure différentielle des signaux de sortie des transducteurs 103 et 104, sur ce premier mode.

De même, les points 16 représentent les amplitudes des signaux de sortie des transducteurs 103 et 104, qui interviennent lorsque le deuxième mode de Helmholtz est excité. Les points 14 représentent la mesure différentielle des signaux en sortie des transducteurs 123 et 124 sur ce deuxième mode.

On observe que les fréquences de résonances sont mises en évidence et que, à chacune des fréquences de résonance, une seule des deux mesures révèle cette résonance. Ainsi, chacune des ondes stationnaires ne constituent pas une onde parasite pour l'autre onde stationnaire.

On observe aussi, en regard de la figure 4, que le dispositif objet de la présente invention permet le fonctionnement sur une résonance de type Helmholtz à des fréquences au-delà du kHz. La cellule conserve des dimensions compatibles avec un couplage simple du faisceau laser (lentille de collimation). De même, les contraintes technologiques de fabrication restent proches d'une cellule macroscopique.

Pour la détection de plusieurs gaz simultanément, on exploite le premier mode de résonance pour la détection d'un premier gaz et le deuxième mode pour la détection d'un deuxième gaz.

Dans des modes de réalisation, le dispositif objet de la présente invention est monté sur un véhicule, le tube d'entrée 118 communiquant avec l'extérieur du véhicule et aspirant l'air pour effectuer les détections de gaz à détecter.

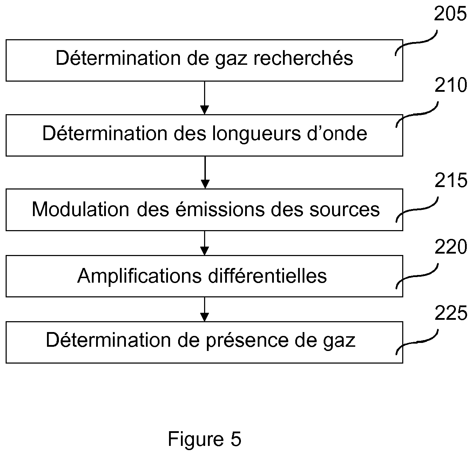

Comme illustré en figure 5, dans un mode de réalisation particulier, le procédé comporte, d'abord, une étape 205 de détermination de gaz recherchés.

Au cours d'une étape 210, on détermine les longueurs d'onde des sources d'énergie radiante qui correspondent à des pics d'absorption des gaz recherchés.

Au cours de l'étape 215, on module les émissions des sources d'énergie radiantes, respectivement, aux fréquences de résonance de la cuve.

Au cours d'une étape 220, on capture et on amplifie de manière différentielle les signaux sonores présents dans les différents tubes.

Au cours d'une étape 225, en fonction de ce signal différentiel, on détermine, pour chaque gaz recherché, s'il est présent dans les tubes du dispositif photo-acoustique et on estime la quantité de ce gaz en fonction de l'amplitude différentielle obtenue.

Comme on le comprend à la lecture de la description de la figure 5, selon les modes de fonctionnement de ce dispositif :
- soit on met en oeuvre simultanément au moins deux sources d'énergie radiante laser à deux longueurs d'ondes caractéristiques d'un même gaz, ce qui augmente la sensibilité de détection et de mesure de la quantité de ce gaz,
- soit on met en oeuvre simultanément, les sources d'énergie radiante laser à des longueurs d'ondes caractéristiques de différents gaz, ce qui permet la détection et la mesure simultanée des quantités des gaz recherchés.

## Revendications

1. Dispositif de détection photo-acoustique d'au moins un gaz, **caractérisé en ce qu'**il comporte :
- une cuve (100) résonnante de type Helmholtz constituée de deux tubes primaires (105, 106) fermés à leurs extrémités et reliés entre eux, à proximité de chacune de leurs extrémités, par deux tubes secondaires (109, 110),
- un moyen d'introduction de gaz (118, 119) dans ladite cuve,
- au moins une première source (112) d'énergie radiante laser modulée à une première fréquence de résonance de la cuve, qui fournit une énergie d'excitation dans au moins un des tubes primaires, à une longueur d'onde d'émission correspondant à une longueur d'onde d'absorption maximum localement pour un premier gaz, chaque dite première source d'énergie radiante étant positionnée en regard d'une fenêtre fermant une extrémité de tube primaire, pour générer une première onde stationnaire se propageant le long des tubes secondaires,
- au moins une deuxième source (117) d'énergie radiante laser modulée à une deuxième fréquence de résonance de la cuve, qui fournit une énergie d'excitation dans au moins un des tubes secondaires, à une longueur d'onde d'émission correspondant à une longueur d'onde d'absorption maximum localement pour un deuxième gaz, chaque dite première source d'énergie radiante étant positionnée en regard d'une fenêtre fermant une extrémité de tube primaire, pour générer une deuxième onde stationnaire se propageant le long des tubes primaires,
- au moins un transducteur acousto-électrique (103, 104, 123, 124) disposé sur une paroi de chaque tube pour détecter les signaux acoustiques produits dans ce tube,
- un moyen de traitement (120) des signaux issus des transducteurs disposés sur les tubes primaires, pour extraire une amplitude de la première onde stationnaire et
- un moyen de traitement (122) des signaux issus des transducteurs disposés sur les tubes secondaires, pour extraire une amplitude de la deuxième onde stationnaire.

2. Dispositif selon la revendication 1, dans lequel les sources (112, 117) d'énergie radiante laser ont des longueurs d'onde d'émission correspondant à des pics d'absorption du même gaz.

3. Dispositif selon l'une des revendications 1 ou 2, dans lequel les sources (112, 117) d'énergie radiante laser ont la même longueur d'onde d'émission.

4. Dispositif selon l'une des revendications 1 à 3, qui comporte deux sources d'énergie radiante laser en regard de deux tubes parallèles de la cuve de type Helmholtz, les dites deux sources d'énergie radiantes laser ayant des longueurs d'onde d'émission correspondant à des pics d'absorption du même gaz, éventuellement identiques, dans lequel le moyen de modulation est adapté à moduler simultanément l'énergie d'excitation fournie par les deux sources d'énergie radiante laser se trouvant en regard de deux tubes différents en appliquant un déphasage de 180° entre les énergies d'excitation des dites sources d'énergie radiante laser.

5. Dispositif selon l'une des revendications 1 à 4, dans lequel, dans la cuve résonante (100) de type Helmholtz, les extrémités des tubes primaires touchent les extrémités des tubes secondaires.

6. Dispositif selon la revendication 5, dans lequel les extrémités des tubes présentent des parois inclinées (102) par rapport aux axes principaux des tubes pour réfléchir les ondes acoustiques depuis les tubes primaires vers les tubes secondaires et réciproquement.

7. Dispositif selon l'une des revendications 1 à 6, dans lequel la cuve de type Helmholtz comporte au moins une entrée (118) ou une sortie (119) de gaz sur une paroi extrême (102) d'un tube.

8. Dispositif selon l'une des revendications 1 à 7, dans lequel au moins un moyen (120, 122) de traitement de signaux issus des transducteurs disposés sur des tubes parallèles comporte un amplificateur opérationnel, les signaux de sortie des transducteurs étant appliqués aux entrées positives et négatives de l'amplificateur opérationnel.

## Patentansprüche

1. Photoakustische Detektionsvorrichtung mindestens eines Gases, **dadurch gekennzeichnet, dass** sie umfasst:
- einen Helmholtz-Resonator (100), bestehend aus zwei Primärrohren (105, 106), die an ihren Enden verschlossen und in der Nähe von beiden Enden durch zwei Sekundärrohre (109, 110) miteinander verbunden sind,
- ein Mittel zum Einbringen von Gas (118, 119) in den Resonator,
- mindestens eine erste Quelle (112) modulierter Laserstrahlungsenergie bei einer ersten Resonanzfrequenz des Resonators, die eine Anregungsenergie in mindestens einem der Primärrohre bei einer Emissionswellenlänge liefert, die einer lokal maximalen Absorptionswellenlänge für ein erstes Gas entspricht, wobei jede besagte erste Strahlungsenergiequelle gegenüber einem Fenster positioniert ist, das ein Ende des Primärrohrs schließt, um eine erste Stehwelle zu erzeugen, die sich entlang der Sekundärrohre ausbreitet,
- mindestens eine zweite Quelle (117) modulierter Laserstrahlungsenergie bei einer zweiten Resonanzfrequenz des Resonators, die eine Anregungsenergie in mindestens einem der Sekundärrohre bei einer Emissionswellenlänge liefert, die einer lokal maximalen Absorptionswellenlänge für ein zweites Gas entspricht, wobei jede besagte erste Strahlungsenergiequelle gegenüber einem Fenster positioniert ist, das ein Ende des Primärrohrs schließt, um eine zweite Stehwelle zu erzeugen, die sich entlang der Primärrohre ausbreitet,
- mindestens einen Schallwandler (103, 104, 123, 124), der an einer Wand jedes Rohrs angebracht ist, um die in diesem Rohr erzeugten akustischen Signale zu erfassen,
- ein Mittel zur Verarbeitung (120) der Signale, die von den auf den Primärrohren angebrachten Wandlern kommen, um eine Amplitude der ersten Stehwelle zu extrahieren, und
- ein Mittel zur Verarbeitung (122) der Signale, die von den auf den Sekundärrohren angebrachten Wandlern kommen, um eine Amplitude der zweite Stehwelle zu extrahieren.

2. Vorrichtung nach Anspruch 1, wobei die Quellen (112, 117) der Laserstrahlungsenergie Emissionswellenlängen aufweisen, die Absorptionsspitzen desselben Gases entsprechen.

3. Vorrichtung nach einem der Ansprüche 1 oder 2, wobei die Quellen (112, 117) der Laserstrahlungsenergie die gleiche Emissionswellenlänge haben.

4. Vorrichtung nach einem der Ansprüche 1 bis 3, die zwei Laserstrahlungsenergiequellen gegenüber zwei parallelen Rohren des Helmholtz-Resonators umfasst, wobei die beiden Laserstrahlungsenergiequellen Emissionswellenlängen aufweisen, die Absorptionsspitzen desselben Gases entsprechen, die eventuell identisch sind. In dieser Vorrichtung ist das Modulationsmittel geeignet, die Anregungsenergie der beiden Laserstrahlungsenergiequellen, die sich gegenüber zwei verschiedenen Rohren befinden, gleichzeitig durch 180° Phasenverschiebung zwischen den Anregungsenergien der besagten Laserstrahlungsenergiequellen zu modulieren.

5. Vorrichtung nach einem der Ansprüche 1 bis 4, wobei im Helmholtz-Resonator (100) die Enden der Primärrohre die Enden der Sekundärrohre berühren.

6. Vorrichtung nach Anspruch 5, wobei die Rohrenden schräge Wände (102) in Bezug auf die Hauptachsen der Rohre aufweisen, um die Schallwellen von den Primärrohren zu den Sekundärrohren und umgekehrt zu reflektieren.

7. Vorrichtung nach einem der Ansprüche 1 bis 6, wobei der Helmholtz-Resonator mindestens einen Gaseinlass (118) oder einen Gasauslass (119) an einer Endwand (102) eines Rohrs aufweist.

8. Vorrichtung nach einem der Ansprüche 1 bis 7, wobei mindestens ein Mittel (120, 122) zur Verarbeitung von Signalen von auf parallelen Rohren angeordneten Wandlern einen Betriebsverstärker umfasst, wobei die Ausgangssignale der Wandler an die positiven und negativen Eingänge des Betriebsverstärkers angelegt werden.

## Claims

1. Device for the photoacoustic detection of at least one gas, **characterised in that** it comprises:
- a Helmholtz-type resonant tank (100) consisting of two primary tubes (105, 106), whose ends are closed, connected to each other near their extremities by two secondary tubes (109, 110);
- a means for introducing gas (118, 119) in said tank;
- at least one first source (112) of radiant laser energy modulated to a first resonance frequency of the tank, which supplies an excitation energy in at least one of the primary tubes, with an emission wavelength matching a local maximum absorption wavelength for a first gas, each said first source of radiant energy being positioned opposite a window closing a primary tube extremity, to generate a first standing wave propagating along the secondary tubes;
- at least one second source (117) of radiant energy modulated to a second resonance frequency of the tank, which supplies an excitation energy in at least one of the secondary tubes, with an emission wavelength matching a local maximum absorption wavelength for a second gas, each said first source of radiant energy being positioned opposite a window closing a primary tube extremity, to generate a second standing wave propagating along the primary tubes;
- at least one acoustoelectric transducer (103, 104, 123, 124) arranged on a wall of each tube for detecting the acoustic signals produced in said tube;
- a means (120) for processing the signals coming from the transducers positioned on the primary tubes, to extract an amplitude of the first standing wave; and
- a means (122) for processing the signals coming from the transducers positioned on the secondary tubes, to extract an amplitude of the second standing wave.

2. Device according to claim 1, wherein the sources (112, 117) of radiant laser energy have emission wavelengths that match the absorption peaks of the same gas.

3. Device according to one of claims 1 or 2, wherein the sources (112, 117) of radiant laser energy have the same emission wavelength.

4. Device according to one of claims 1 to 3, which comprises two sources of radiant laser energy opposite two parallel tubes of the Helmholtz-type tank, said two sources of radiant laser energy having emission wavelengths matching absorption peaks of the same gas, possibly identical, wherein the modulation means is designed to modulate simultaneously the excitation energy supplied by the two sources of radiant laser energy located opposite two different tubes by setting a 180° phase shift between the excitation energies of said sources of radiant laser energy.

5. Device according to one of claims 1 to 4, wherein, in the Helmholtz-type resonant tank (100), the extremities of the primary tubes touch the extremities of the secondary tubes.

6. Device according to claim 5, wherein the extremities of the tubes have walls (102) that are inclined in relation to the principal axes of the tubes to reflect the acoustic waves from the primary tubes towards the secondary tubes and vice versa.

7. Device according to one of claims 1 to 6, wherein the Helmholtz-type tank comprises at least one gas inlet (118) or one gas outlet (119) on one end wall (102) of a tube.

8. Device according to one of claims 1 to 7, wherein at least one means (120, 122) for processing signals coming from the transducers positioned on parallel tubes comprises an operational amplifier, the signals output from the transducers being applied to the positive and negative inputs of the operational amplifier.
